# DEMANDE DE BREVET EUROPEEN

(11) **EP 2 469 491 A1**
(43) Date de publication de la demande: **27.06.2012**
(21) Numéro de dépôt: 11194885.7
(22) Date de dépôt: 21.12.2011
(51) Int. Cl.: G08B 13/14, B62H 5/00, E05B 45/00, E05B 67/00

(54) **Système antivol pour équipement mobile**

(30) Priorité: 22.12.2010 FR 1061059
(71) Demandeur: Commissariat à l'Énergie Atomique et aux Énergies Alternatives, 75015 Paris (FR)
(72) Inventeur: Aubouy, Miguel, 38000 GRENOBLE (FR)
(74) Mandataire: de Beaumont, Michel

(57) **Abrégé**

L'invention concerne un procédé d'établissement d'un lien antivol entre un premier équipement mobile (10) et au moins un deuxième équipement mobile (10), comportant les étapes suivantes : une phase d'établissement d'un lien mécanique (42) entre le premier équipement et chacun des deuxièmes équipements ; une phase de reconnaissance mutuelle entre le premier équipement et chacun des deuxièmes équipements ; une phase d'établissement d'un lien virtuel (50) entre le premier équipement et chacun des deuxièmes équipements ; une phase de surveillance mutuelle des équipements entre eux, dans laquelle chaque équipement surveille une éventuelle rupture du lien mécanique et du ou des liens virtuels qui le lient aux autres équipements ; et une phase d'alerte en cas de rupture des liens mécanique et virtuels.

## Description

### Domaine de l'invention

La présente invention concerne de façon générale les systèmes antivol et, plus particulièrement, les systèmes antivol d'équipements mobiles.

### Exposé de l'art antérieur

La plupart des équipements mobiles, par exemple les véhicules à deux roues, sont équipés de dispositifs antivol. Ces dispositifs sont généralement des systèmes d'ancrage, comportant un élément du côté de l'équipement mobile et un élément du côté d'un équipement fixe, d'un bâtiment et, plus généralement, d'un équipement d'ancrage de nature différente de l'équipement mobile.

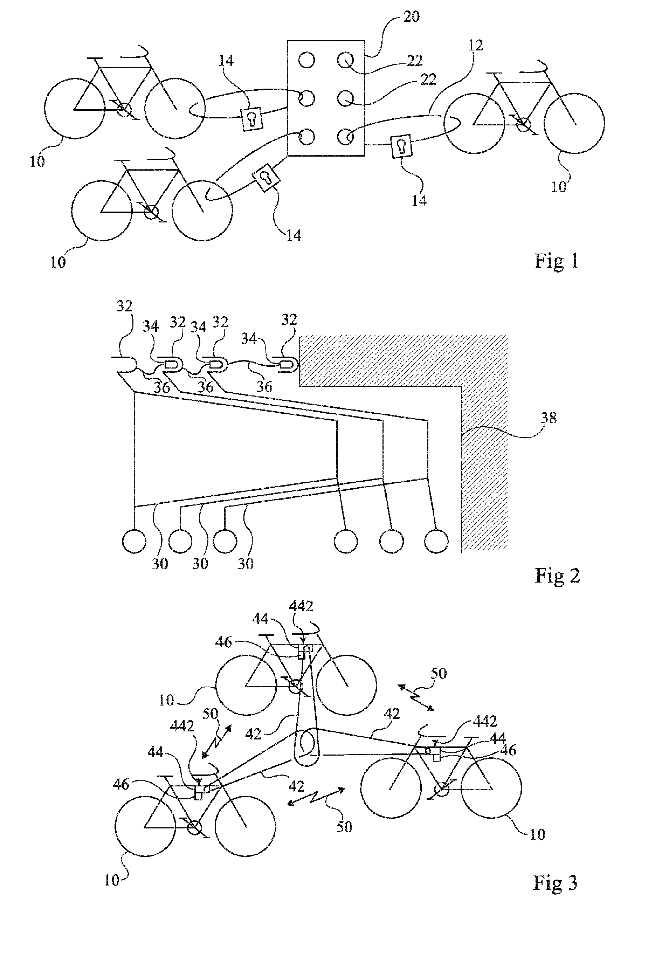

La figure 1 est une représentation schématique d'un système antivol usuel de ce type. L'exemple de la figure 1 se réfère à un système destiné à des bicyclettes 10. Un utilisateur souhaitant sécuriser sa bicyclette 10 utilise un élément de type chaîne 12 (souple ou rigide) se refermant en boucle à l'aide d'un cadenas 14. La chaîne 12 est alors utilisée pour relier la bicyclette à un équipement fixe 20, par exemple une borne, en passant la chaîne à travers un élément, par exemple un anneau 22, de cette borne. Il peut également s'agir d'un élément du paysage (arbre, barrière, etc.).

On connaît également des systèmes comportant un élément côté équipement mobile et un autre élément côté équipement fixe, ces deux éléments étant destinés à s'apparier pour fixer l'élément mobile, que ce soit directement à une borne (cas, par exemple, des parcs de bicyclettes partagées) ou en chaîne (cas des chariots de supermarché).

La figure 2 représente un exemple d'un système pour chariots de supermarché. Dans un tel système, les chariots 30 s'encastrent les uns dans les autres et chaque chariot 30 porte un élément femelle 32 de verrouillage d'un élément male 34 relié par une chaînette 36 à un autre chariot. Un premier chariot est généralement attaché à un élément femelle lié à un équipement fixe 38 (par exemple une borne ou un mur).

En l'absence de dispositif d'ancrage, les dispositifs antivol (par exemple les chaînes de la figure 1) bloquent généralement une fonction de l'équipement mobile (par exemple, une roue de la bicyclette), mais n'empêchent pas le déplacement donc le vol de cet équipement.

Il serait souhaitable de disposer d'un système antivol interdisant le déplacement d'un équipement mobile sans pour autant requérir de système d'ancrage mécanique au sol ou à un équipement fixé au sol.

### Résumé

Un objet d'un mode de réalisation de la présente invention est de pallier tout ou partie des inconvénients des systèmes antivol usuels.

Un autre objet d'un mode de réalisation de la présente invention est de proposer un système antivol dans lequel le recours à un équipement fixe n'est pas requis.

Un autre objet d'un mode de réalisation de la présente invention est de proposer un système dans lequel une alarme peut être générée indépendamment de tout dispositif fixé, directement ou indirectement, au sol.

Pour atteindre tout ou partie de ces objets ainsi que d'autres, on prévoit un procédé d'établissement d'un lien antivol entre un premier équipement mobile et au moins un deuxième équipement mobile, comportant les étapes suivantes :
une phase d'établissement d'un lien mécanique entre le premier équipement et chacun des deuxièmes équipements ;
une phase de reconnaissance mutuelle entre le premier équipement et chacun des deuxièmes équipements ;
une phase d'établissement d'un lien virtuel entre le premier équipement et chacun des deuxièmes équipements ;
une phase de surveillance mutuelle des équipements entre eux, dans laquelle chaque équipement surveille une éventuelle rupture du lien mécanique et du ou des liens virtuels qui le lient aux autres équipements ; et
une phase d'alerte en cas de rupture des liens mécanique et virtuels.

Selon un mode de réalisation de la présente invention, la rupture d'un seul des liens mécanique et virtuel s'accompagne d'une pré-alerte.

Selon un mode de réalisation de la présente invention, une information de rupture du lien mécanique ou d'un lien virtuel est transmise à tous les équipements.

Selon un mode de réalisation de la présente invention, la vérification du lien virtuel est périodique.

Selon un mode de réalisation de la présente invention, chaque équipement mobile stocke, dans une mémoire d'un dispositif électronique qu'il comporte, les identifiants respectifs des autres équipements mobiles avec lesquels un lien est établi.

On prévoit également un dispositif antivol destiné à être solidaire d'un premier équipement mobile, comprenant :
des moyens d'établissement d'un lien mécanique avec au moins un deuxième dispositif antivol équipant un deuxième équipement mobile ;
des moyens d'établissement d'un lien virtuel avec les deuxièmes équipements mobiles ;
des moyens de surveillance des liens mécanique et virtuels ;
des moyens de détection d'une rupture du lien mécanique ou d'un des liens virtuels ;
des moyens d'alerte en cas de rupture de lien ; et
des moyens d'indication aux deuxièmes équipements d'un souhait de rupture de lien par le premier équipement.

On prévoit également un équipement mobile, comportant un tel dispositif.

On prévoit en outre un système antivol entre différents éléments mobiles, comprenant au moins deux équipements.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 décrite précédemment représente, de façon très schématique, un exemple de système antivol usuel pour bicyclettes ;
la figure 2 décrite précédemment représente, de façon très schématique, un exemple de système antivol usuel pour chariots de supermarché ;
la figure 3 est une représentation schématique d'un mode de réalisation d'un système antivol ;
la figure 4 illustre un mode de mise en oeuvre d'un procédé d'inclusion d'un nouvel équipement mobile dans un système antivol ;
la figure 5 est une représentation très schématique d'un mode de mise en oeuvre d'un procédé de libération d'un équipement mobile d'un système antivol ; et
la figure 6 est un organigramme simplifié d'étapes mises en oeuvre par le système antivol.

### Description détaillée

De mêmes éléments ont été désignés par de mêmes références aux différentes figures. Par souci de clarté, seuls les étapes et éléments utiles à la compréhension de l'invention ont été représentés et seront décrits. En particulier, l'exploitation faite de la détection d'une rupture de lien dans le système antivol n'a pas été détaillée, l'invention étant compatible avec toute exploitation usuelle, pourvu que les équipements mobiles soient équipés des éléments d'exploitation requis (sirène, connexion à un réseau, etc.).

Les modes de réalisation du système antivol vont être décrits en relation avec un exemple appliqué à des bicyclettes. Ils s'appliquent toutefois plus généralement à tout équipement mobile auquel peut être fixé de façon inamovible un élément mécanique de verrouillage avec au moins un autre élément mécanique d'un autre équipement mobile. En d'autres termes, les équipements mobiles du système sont capables de créer des liens mécaniques entre eux.

La figure 3 est une représentation schématique d'un mode de réalisation d'un système antivol. Dans cet exemple, trois bicyclettes 10 coopèrent entre elles pour former le système antivol. Chaque bicyclette comporte au moins un élément de liaison mécanique 42, par exemple une chaîne ou un câble, fixé de façon inamovible par une extrémité à la bicyclette et susceptible d'être attaché, de façon amovible par son autre extrémité, à un boîtier électronique antivol 44 que comporte la bicyclette. La fixation amovible est par exemple une fixation à l'aide d'une serrure, l'utilisateur possédant une clé pour libérer l'une des extrémités. Les éléments 42 sont destinés à coopérer entre eux d'une bicyclette à une autre d'un même système pour les attacher mutuellement de façon mécanique. Dans l'exemple de la figure 3, chaque lien 42 forme une boucle prenant les boucles des autres liens 42. Ainsi, on note déjà que chaque bicyclette équipée de ce système peut entrer ou sortir du système sans pour autant rompre les liens entre les autres bicyclettes du système. D'autres types de liens mécaniques de ce type peuvent être prévus pourvu de respecter la fonctionnalité de permettre à chaque équipement de s'intégrer dans le système et d'en sortir sans rompre les liens entre les autres équipements du système, et la fonctionnalité qu'une ouverture du lien mécanique de l'équipement concerné soit détectée au moins par son propre boîtier électronique 44.

Par ailleurs, chaque boîtier 44 comporte un élément d'émission-réception sans contact (par exemple des moyens radiofréquences) symbolisé par une antenne 442, susceptible de communiquer avec d'autres éléments similaires que comportent les boîtiers 44 des autres bicyclettes qui sont à portée. L'activation de l'élément d'émission-réception d'une bicyclette est de préférence provoquée par la fermeture de sa boucle mécanique. Les éléments de communication sans contact ont pour rôle de créer, en plus du lien mécanique qui lie les différents équipements, un lien virtuel entre eux.

Le lien virtuel peut, en variante, être basé sur une technologie acoustique analysant le temps que mettent les ondes à être réfléchies par les différents équipements pour en déduire une distance relative. On pourra encore envisager un localisateur magnétique actif équipé d'une source et d'un capteur magnétique tri-axes. Un calculateur détermine alors les positions respectives de l'émetteur par rapport au récepteur. Dans la mesure où chaque équipement mobile est équipé du même dispositif, les équipements se détectent mutuellement.

On peut également prévoir des seuils de distance au-delà desquels les différents dispositifs considèrent une rupture du lien virtuel.

Chaque équipement est en outre équipé d'un dispositif d'alarme 46 (par exemple une sirène ou un émetteur vers un réseau de télécommunication) commandé par le boîtier 44 en cas de rupture non autorisée du lien mécanique ou du lien virtuel entre les équipements sous surveillance dans le système.

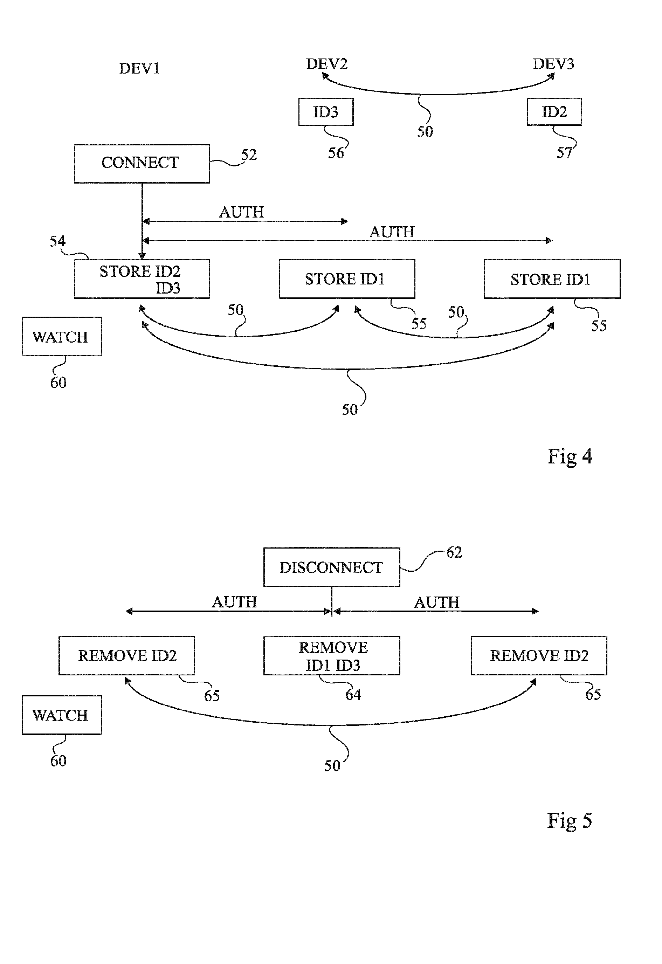

La figure 4 est une représentation schématique illustrant l'insertion d'un équipement mobile DEV1, par exemple une bicyclette, dans un ensemble d'équipements coopérant d'un système antivol. Dans l'exemple de la figure 4, on suppose que deux équipements mobiles DEV2 et DEV3 ont déjà formé entre eux un système antivol, symbolisé en figure 4 par une liaison 50.

Lorsque l'équipement DEV1 entre dans le système en attachant physiquement son lien 42 à celui des deux autres équipements, cela provoque un processus de connexion (bloc 52, CONNECT) au cours duquel son dispositif électronique communique avec celui des deux autres équipements dans une phase d'authentification AUTH. Cette phase comporte notamment la transmission, entre les boîtiers électroniques 44 des différents équipements, d'identifiants respectifs ID1, ID2 et ID3 de ces équipements. L'équipement DEV1 stocke (bloc 54, STORE ID2, ID3) les identifiants des deux autres équipements dans une mémoire de son boîtier électronique 44 tandis que les équipements DEV2 et DEV3 stockent chacun (bloc 55, STORE ID1) l'identifiant du dispositif DEV1. Dans la mesure où les deux équipements DEV2 et DEV3 partageaient déjà leur connexion antivol, chacun possède déjà l'identifiant de l'autre (bloc 56, ID3 et bloc 57, ID2).

Diverses techniques peuvent être utilisées pour la mémorisation des identifiants et leur activation dans le système. Selon un premier exemple où les équipements susceptibles de participer au système sont connus d'avance, chaque dispositif contient une table des identifiants autorisés à s'inclure dans le système, et la connexion consiste à identifier dans cette table les identifiants des équipements connectés. Selon un autre exemple, dit ouvert, les différents équipements sont capables de se reconnaître, par exemple en possédant tous un identifiant commun, et de se transmettre leurs identifiants individuels à chaque connexion. D'autres réalisations sont possibles en respectant les fonctionnalités décrites.

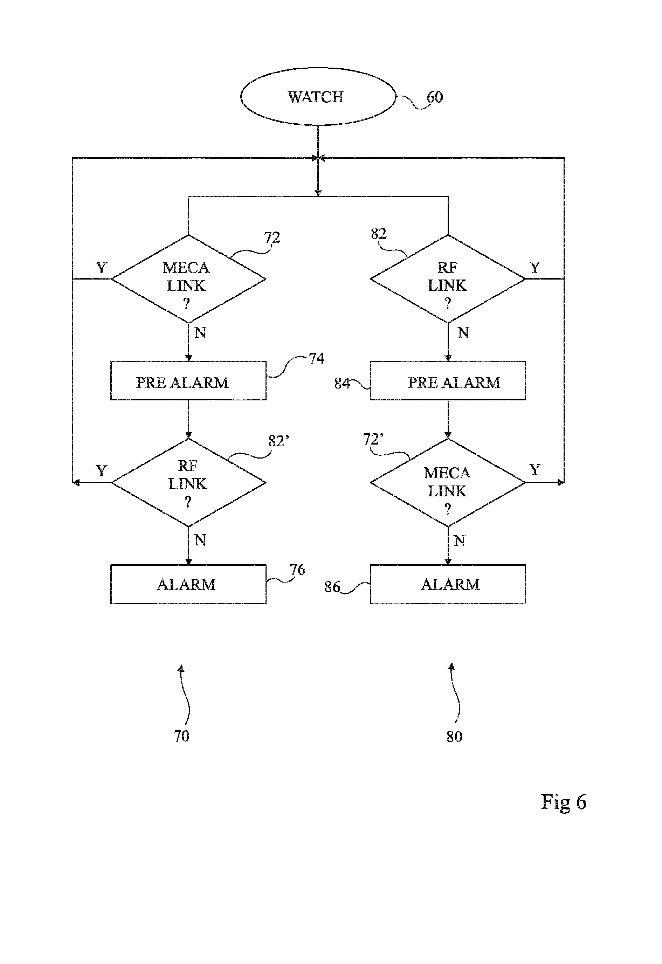

Une fois la phase d'authentification et d'initialisation terminée, les différents dispositifs 44 entrent dans une phase (bloc 60, WATCH) de surveillance mutuelle, dans laquelle chaque dispositif vérifie son propre lien mécanique et la connexion virtuelle avec les autres équipements. Un mode de réalisation d'une telle procédure de surveillance sera exposé par la suite en relation avec la figure 6.

La figure 5 illustre, de façon très schématique un mode de fonctionnement du système antivol lors d'une déconnexion d'un des équipements mobiles.

Lorsqu'un des équipements souhaite se déconnecter du système, il entame une procédure de rupture de ses liens mécanique et virtuels 50 avec les autres équipements. Dans l'exemple de la figure 5, on suppose que le dispositif DEV2 souhaite sortir du système (bloc 62, DISCONNECT). Une telle procédure peut être initiée par l'ouverture du lien mécanique à l'aide de la clé de déverrouillage de ce lien au niveau du boîtier 44 ou par tout autre moyen de reconnaissance de l'utilisateur (par exemple saisie d'un code sur une serrure à clavier). La procédure de déconnexion comprend une procédure d'authentification (AUTH) de l'équipement souhaitant sortir du système avec les deux autres, cette procédure incluant une information comme quoi le lien mécanique (42, figure 3) a été rompu de façon autorisée. Une fois cette procédure terminée, l'équipement DEV2 concerné supprime les identifiants ID1 et ID3 (bloc 64, REMOVE ID1, ID3) de sa table de surveillance. Les deux autres équipements DEV1 et DEV2 suppriment (bloc 65, REMOVE ID2) l'identifiant du deuxième équipement de leurs mémoires respectives. Les équipements restent alors, dans l'exemple de la figure 5, chacun avec l'identifiant de l'autre. Une fois la sortie du deuxième équipement terminée, les équipements DEV1 et DEV3 restant liés 50 par le système reprennent une procédure de surveillance (bloc 60) .

De préférence, lors d'une déconnexion autorisée du dernier lien reliant des dispositifs (les deux derniers dispositifs), le possesseur du dernier dispositif restant est averti, par exemple via son téléphone mobile (par l'envoi d'un SMS ou autre), que son dispositif n'est plus en réseau.

La figure 6 est un organigramme simplifié illustrant un exemple de réalisation de la procédure de surveillance 60. Cette procédure est mise en oeuvre par chacun des équipements du système et consiste en une surveillance à la fois des liens mécaniques (branche 70) et des liens virtuels (branche 80) entre les différents dispositifs d'alarme des équipements.

La détection d'une rupture du lien mécanique (bloc 72, MECA LINK ?) est déclenchée par un détecteur que comporte les boîtiers 44 des différents équipements mobiles. On peut détecter non seulement l'ouverture de la serrure, mais également une coupure du lien, par exemple en prévoyant un conducteur électrique sur ou dans le câble. En parallèle à cette surveillance, les différents équipements vérifient périodiquement de façon électronique la présence de leur liaison radio (bloc 82, RF LINK ?). Tant que ces deux liaisons existent (sorties Y des blocs 72 et 82) le système se reboucle sur lui-même. En cas de disparition d'un des liens (sortie N du bloc 72 ou 82), le ou les dispositifs ayant détectés cette rupture se placent dans une situation de pré-alarme (bloc 74 et 84, PREALARM) à la suite de quoi l'existence de l'autre liaison est vérifiée pour valider l'alarme.

Côté branche 70, le dispositif ayant détecté la rupture du lien mécanique entame une procédure de vérification des liens virtuels (bloc 82', RF LINK ?). Si cette liaison virtuelle est également rompue, l'alarme est confirmée (bloc 76, ALARM) . Dans le cas contraire, le processus de surveillance revient en entrée des blocs 72 et 82.

Côté branche 80, une pré-alarme est suivie par une vérification d'existence du lien mécanique des différents dispositifs ayant détectés la rupture du lien virtuel. Cette vérification du lien mécanique (bloc 72', MECA LINK ?) consiste par exemple à interroger le détecteur mécanique des différentes serrures. Si le lien mécanique est également rompu, l'alarme est confirmée (bloc 86) dans le cas contraire, le processus de surveillance revient en entrée des blocs 72 et 82.

Tout autre protocole respectant les fonctionnalités et objectifs décrits peut être prévu.

La nature de l'alarme dépend des applications. On peut concevoir une alarme sonore émise par tout ou partie des équipements concernés. On peut aussi prévoir que les différents circuits 44 soient équipés d'un système de transmission vers un réseau distant pour transmettre une alarme à un serveur. Tout autre mode de transmission et d'exploitation d'une alarme peut être envisagé, par exemple une transmission vers le téléphone mobile de l'utilisateur.

En variante, le dispositif volé mémorise le fait qu'il a subit une rupture non autorisée du lien. Cela permet, par exemple, qu'il soit reconnu comme volé dès que son utilisateur non autorisé cherche à le connecter de nouveau. Selon un autre exemple, le dispositif volé émet périodiquement un signal susceptible d'être capté par tout autre dispositif compatible. Cela permet de générer une alerte dès que le dispositif volé est détecté par un autre dispositif compatible, qu'ils soient ou non connectés entre eux.

De préférence, les dispositifs 44 sont équipés d'indicateurs d'état à destination de l'utilisateur. Il s'agit, par exemple, de voyants lumineux, d'indicateurs sonores, fournissant à l'utilisateur une information sur l'activation/désactivation de la surveillance.

On peut également prévoir que les dispositifs connectés en réseau activent un indicateur visuel particulier. Ainsi, tout utilisateur à proximité du réseau est en mesure de distinguer les dispositifs appartenant au réseau d'autres dispositifs.

Un avantage des modes de réalisation qui ont été décrits est que le système d'antivol ne nécessite aucune borne ou élément fixe lié au sol ou à un bâtiment.

Un autre avantage est que le système n'est pas limité en nombre d'équipements mobiles.

Un autre avantage est que chaque équipement mobile peut entrer ou sortir du système de surveillance indépendamment des autres.

Divers modes de réalisation ont été décrits, diverses variantes et modifications apparaîtront à l'homme de l'art. En particulier, la réalisation pratique du système antivol est à la portée de l'homme du métier à partir des indications fonctionnelles qui ont été décrites et en utilisant des moyens mécaniques et électroniques usuels. Par exemple, les différents dispositifs sont équipés de microcontrôleurs et des circuits d'interfaces et de transmission adaptés. De plus, bien que l'invention ait été décrite en relation avec un exemple appliqué à des bicyclettes, elle s'applique plus généralement à tout équipement mobile, par exemple, des skis, planches à voile, de surf, etc., même de nature différente les uns des autres, par exemple des engins de chantier, voire même d'outils en considérant que les outils déplaçables sont mobiles. Enfin, bien que le système décrit se passe de borne fixe d'attache virtuelle ou physique des dispositifs, il reste compatible avec l'utilisation d'une telle borne.

## Revendications

1. Procédé d'établissement d'un lien antivol entre un premier équipement mobile (10 ; DEV1) et au moins un deuxième équipement mobile (10 ; DEV2, DEV3), comportant les étapes suivantes :
une phase d'établissement d'un lien mécanique (42) entre le premier équipement et chacun des deuxièmes équipements ;
une phase (CONNECT) de reconnaissance mutuelle entre le premier équipement et chacun des deuxièmes équipements ;
une phase d'établissement d'un lien virtuel (50) entre le premier équipement et chacun des deuxièmes équipements ;
une phase (60) de surveillance mutuelle des équipements entre eux, dans laquelle chaque équipement surveille une éventuelle rupture du lien mécanique et du ou des liens virtuels qui le lient aux autres équipements ; et
une phase (76, 86) d'alerte en cas de rupture des liens mécanique et virtuels.

2. Procédé selon la revendication 1, dans lequel la rupture d'un seul des liens mécanique (42) et virtuel (50) s'accompagne d'une pré-alerte (74).

3. Procédé selon la revendication 1 ou 2, dans lequel une information de rupture du lien mécanique (42) ou d'un lien virtuel (50) est transmise à tous les équipements.

4. Procédé selon l'une quelconque des revendications 1 à 3, dans lequel la vérification du lien virtuel (50) est périodique.

5. Procédé selon l'une quelconque des revendications 1 à 4, dans lequel chaque équipement mobile stocke, dans une mémoire d'un dispositif électronique (44) qu'il comporte, les identifiants respectifs des autres équipements mobiles avec lesquels un lien est établi.

6. Dispositif antivol destiné à être solidaire d'un premier équipement mobile, comprenant :
des moyens d'établissement d'un lien mécanique (42) avec au moins un deuxième dispositif antivol équipant un deuxième équipement mobile ;
des moyens d'établissement d'un lien virtuel (50) avec les deuxièmes équipements mobiles ;
des moyens de surveillance des liens mécanique et virtuels ;
des moyens de détection d'une rupture du lien mécanique ou d'un des liens virtuels ;
des moyens d'alerte en cas de rupture de lien ; et
des moyens d'indication aux deuxièmes équipements d'un souhait de rupture de lien par le premier équipement.

7. Dispositif selon la revendication 6, adapté à mettre en oeuvre le procédé conforme à l'une quelconque des revendications 1 à 5.

8. Equipement mobile, comportant un dispositif conforme à la revendication 6 ou 7.

9. Système antivol entre différents éléments mobiles, comprenant au moins deux équipements conformes à la revendication 8.
